# FASCICULE DE BREVET EUROPEEN

(11) **EP 0 446 155 B1**
(45) Date de publication et mention de la délivrance du brevet: **24.05.1995**
(21) Numéro de dépôt: 91420077.9
(22) Date de dépôt: 05.03.1991
(51) Int. Cl.: D03C 1/00, D03C 1/16, D03D 51/02, F16H 53/06, F16H 25/16

(54) **Mécanisme modulateur pour l'actionnement des ratières textiles du type rotatif**
Modulationsmechanismus zum Aktivieren von Rotationsschaftmaschinen
Modulating mechanism for the command of rotatory dobbies

(30) Priorité: 06.03.1990 FR 9003068
(43) Date de publication de la demande: 11.09.1991
(73) Titulaire: S.A. DES ETABLISSEMENTS STAUBLI (France), 74210 Faverges (FR)
(72) Inventeur: Pages, Jean-Pierre, F-74210 Faverges (FR); Fumex, André, F-74210 Faverges (FR)
(74) Mandataire: Monnier, Guy

(56) Documents cités:
- EP-A- 0 035 954
- FR-A- 2 625 514
- MACHINE DESIGN. vol. 59, no. 1, 8 janvier 1987, CLEVELAND US page 128 FREDERICOSTRASSER: "Controlling motions with cams"

## Description

La présente invention a trait aux ratières du type rotatif pour métiers à tisser et elle concerne plus particulièrement les mécanismes modulateurs interposés entre l'arbre du métier et l'arbre principal de la ratière en vue d'assurer l'entraînement discontinu de ce dernier avec arrêt tous les 180°.

On a proposé différents types de mécanismes modulateurs pour ratières rotatives, certaines constructions connues reproduisant fidèlement des systèmes d'entraînement intermittent utilisés dans d'autres secteurs techniques.

On se référera en premier lieu au Brevet français STAUBLI N° 80.05855/2 478 143 dont on a schématiquement rappelé l'agencement à la fig. 1 du dessin annexé aux présentes. Le mécanisme décrit comprend essentiellement une cage tournante qui est formée par un plateau d'entrée 1 et un disque 2 reliés l'un à l'autre par deux axes longitudinaux 3 et qui est montée folle sur l'arbre principal 4 de la ratière en étant entraînée en rotation par l'arbre du métier à tisser. Cet arbre 4 traverse librement une came fixe 5 du type complémentaire dont les deux disques constitutifs sont rigidement fixés au carter de la ratière ; contre cette came 5 sont appliquées deux paires de galets 6, chaque paire étant montée sur un support 7 qui oscille librement sur l'un des deux axes 3. La liaison articulée entre chaque support oscillant 7 et l'arbre 4 est assurée par un dé 8 qui, mobile à l'intérieur d'une coulisse radiale 7a dudit support et porté à pivotement par deux entretoises 9 solidaires de l'arbre 4, fait fonction de biellette d'entraînement.

Un autre type connu de mécanismes modulateur est illustré par le Brevet U.S.A. STEINKE N° 3 407 678 dont l'agencement a été schématiquement rappelé à la fig. 2 du dessin annexé. Ici, les galets de commande sont remplacés par des pignons 16 qui sont montés fous sur des arbres 13 supportés à rotation par un flasque 12, lequel est calé sur l'arbre du métier 11. Chaque pignon 16 engrène avec une couronne dentée 15 rigidement fixée au carter fixe de la ratière, si bien que chaque arbre 13 est entraîné en rotation. Celui-ci comporte un prolongement 17 désaxé par rapport à l'axe dudit arbre, et la liaison entre chaque prolongement 17 et l'arbre principal 14 de la ratière est opérée à l'aide d'une biellette 18 attelée sur une entretoise 19 calée sur ledit arbre 4.

Plus récemment, on a proposé un agencement qui dérive en fait directement des deux systèmes ci-dessus rappelés, Comme montré à la fig. 3 qui représente de manière très schématique le système illustré aux fig. 3 et 4 du document FR-A-2 625 514 (NUOVEPIGNONE), cet agencement fait à nouveau appel à deux paires de galets 26 montés sur deux supports opposés 27 qui oscillent autour d'axes 23 afin que lesdits galets portent sur une came fixe 25. La liaison entre chaque support 27 et l'arbre 24 de la ratière est réalisée, comme dans le cas du Brevet U.S.A. ci-dessus mentionné, par une biellette 28 attelée d'une part sur un axe latéral 27a dudit support 27, d'autre part sur une entretoise 29 calée sur l'arbre 24 précité.

On comprend que pour qu'un tel agencement fonctionne de manière correcte en assurant l'équilibrage parfait des efforts qui s'exercent sur les deux supports oscillants 27 du système, il est indispensable que ceux-ci et les pièces qui les relient à l'arbre 24 de la ratière comportent une géométrie absolument identique, toute erreur, même minime, de dimensionnement ou de géométrie entraînant l'impossibilité de faire simultanément porter les quatre galets 26 sur les deux pistes de la came complémentaire 25 ; il n'y a dès lors plus qu'un seul support oscillant qui travaille, ce qui engendre un déséquilibre et une surcharge inadmissibles. Or, on sait qu'il est en pratique bien difficile d'éviter systématiquement tout défaut dans une fabrication en série.

C'est à cet inconvénient qu'entend remédier la présente invention, laquelle a pour objet le mécanisme modulateur défini à la revendication 1.

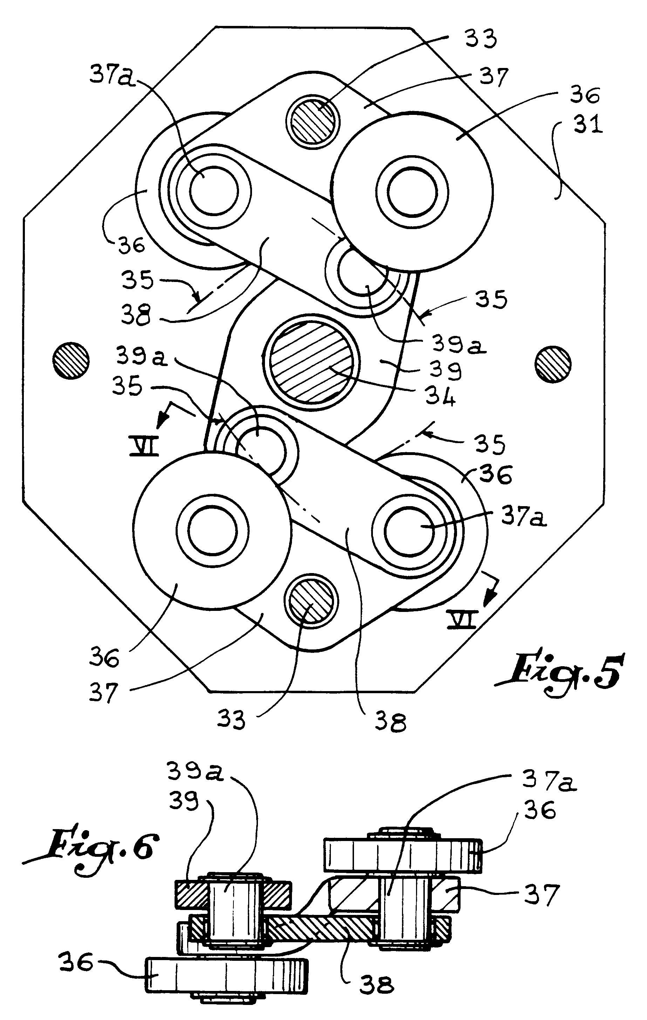

En fait l'invention consiste essentiellement, à la manière très schématiquement illustrée à la fig. 4 du dessin annexé, à faire coïncider le point d'attelage de la biellette de liaison 38 sur le support correspondant 37 avec l'axe 37a sur lequel est monté l'un des deux galets 36 du support 37 considéré.

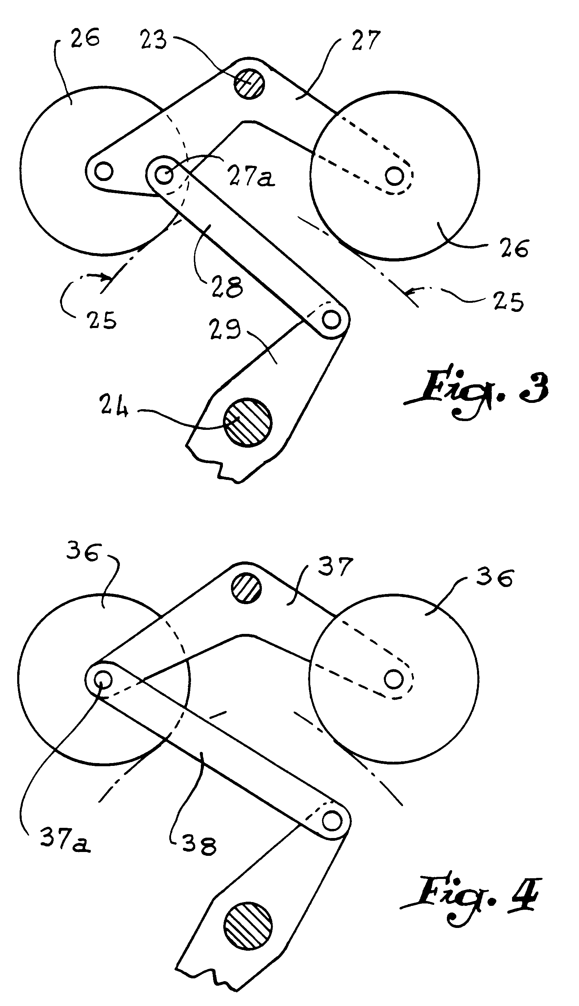

Sans même évoquer l'économie réalisée par la suppression de l'un des quatre alésages prévus sur chaque support suivant le système illustré à la fig. 3, on conçoit que la confusion ou coïncidence du point d'attelage de la biellette de liaison sur le support oscillant avec l'axe de montage de l'un des deux galets de celui-ci évite toute conséquence fâcheuse résultant d'une erreur de géométrie et toute possibilité d'imprécision.

On va maintenant donner une description plus détaillée d'une forme de réalisation du mécanisme modulateur suivant l'invention, forme de réalisation qui a été illustrée sur le dessin annexé dans lequel :
Fig. 5 est une coupe verticale montrant l'agencement du mécanisme considéré.
Fig. 6 est une coupe de détail suivant le plan indiqué en VI-VI en fig. 4.

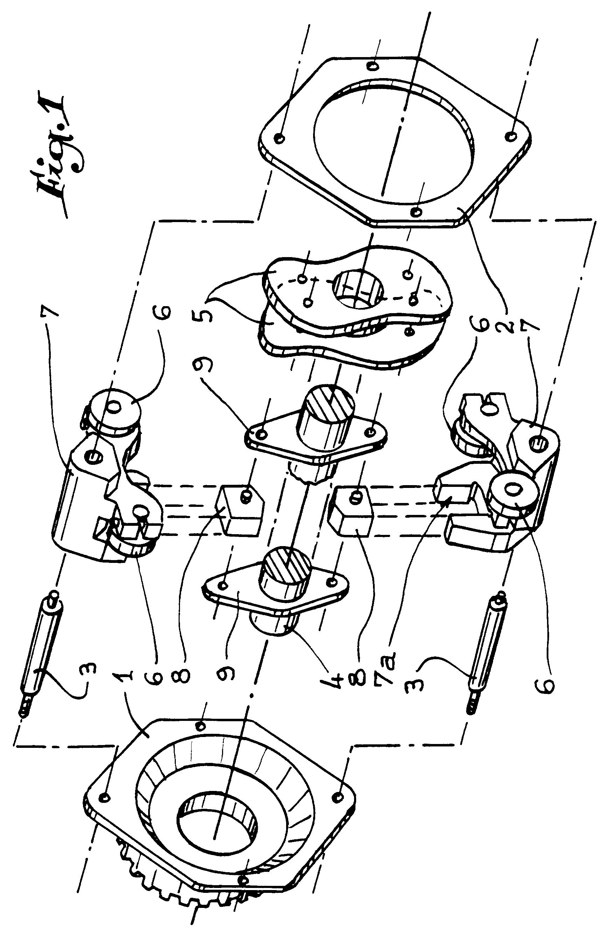

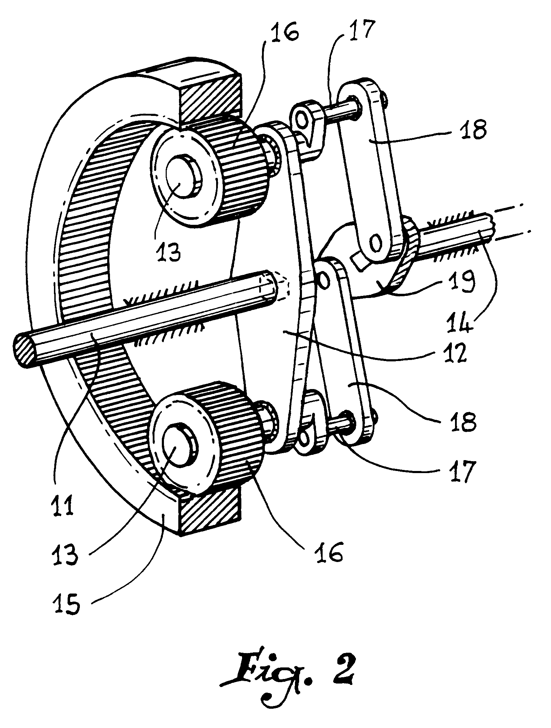

En fig. 5 la référence 31 désigne le disque qui est relié par les deux axes opposés 33 au plateau d'entrée pour constituer une cage tournante analogue à celle décrite en référence à la fig. 1. Sur chacun des deux axes 33 oscille l'un des deux supports 37 équipés des galets 36 destinés à rouler sur les disques profilés de la came fixe 35. Comme plus particulièrement visible en fig. 6, on peut vérifier que chaque biellette de liaison 38 s'articule d'une part à un axe latéral 39a porté par l'entretoise 39 calée sur l'arbre principal 34 de la ratière, d'autre part sur l'un des deux axes 37a prévus sur le support 37 considéré pour le montage des galets fous 36.

Le fonctionnement est identique à celui du mécanisme modulateur suivant la fig. 1, en ce sens que l'oscillation des deux supports 37 impartit, par l'intermédiaire des biellettes 38, à l'arbre 34 le mouvement discontinu désiré. Ainsi qu'on l'a exposé plus haut, l'articulation de chaque biellette 38 sur l'un des deux axes-supports 37a des galets 36 assure dans tous les cas l'équilibre des efforts qui s'exercent sur les deux supports 37.

Il va de soi que l'invention est applicable à des mécanismes modulateurs comprenant plus de deux supports oscillants porte-galets.

## Revendications

1. Mécanisme modulateur pour l'actionnement des ratières textiles du type rotatif, interposé entre l'arbre du métier à mouvement circulaire continu et l'arbre principal (34) de la ratière pour animer ce dernier d'un mouvement circulaire discontinu avec temps d'arrêt tous les 180°, lequel mécanisme comprend à la façon connue une cage (31-33) entraînée en rotation par l'arbre du métier et équipée d'au moins deux supports oscillants opposés (37) dont chacun, pourvu de deux galets (36) qui roulent au contact des deux disques d'une came complémentaire fixe (35), est relié à l'arbre principal (34) par une biellette (38) attelée d'une part audit support (37), d'autre part à une entretoise (39) solidaire de l'arbre principal (34) précité, caractérisé en ce que le point d'attelage de la biellette de liaison (38) sur le support (37) correspondant coïncide avec l'axe (37a) sur lequel est monté l'un des deux galets (36) du support (37) considéré.

## Claims

1. Mechanism for modulating the actuation of textile dobbies of the rotary type, interposed between the shaft of the boom with continuous circular movement and the principal shaft (34) of the dobby to animate the latter by a discontinuous circular movement with stop time every 180°, which mechanism comprises in known manner a cage (31-33) driven in rotation by the shaft of the loom and equipped with at least two opposite oscillating supports (37) of which each, provided with two rollers (36) which roll in contact with the two discs of a fixed complementary cam (35), is connected to the principal shaft (34) by a small rod (38) coupled, on the one hand, to said support (37), on the other hand, to a brace (39) fast with the principal shaft (34) mentioned above, characterized in that the point of coupling of the connecting rod (38) on the corresponding support (37) merges with the pin (37a) on which one of the two rollers (36) of the support (37) in question is mounted.

## Patentansprüche

1. Modulationsmechnismus zum Aktivieren von Rotationsschaftmaschinen, eingefügt zwischen die Welle des Webstuhls mit kontinuierlicher Umlaufbewegung und der Hauptwelle (34) der Schaftmaschine, um diese letztere in eine diskontinuierliche Umlaufbewegung zu versetzen, mit Anhalten nach jeweils 180°, wobei dieser Mechanismus auf bekannte Weise einen Käfig (31-33) umfaßt, der in Drehung versetzt wird durch die Welle des Webstuhls und ausgestattet ist mit wenigstens zwei entgegengesetzten Schwingstützen (37), von den, jede - ausgestattet mit zwei Rollen (36), die in Kontakt mit den beiden Scheiben eines feststehenden, komplementären Nockens (35) rollen - verbunden ist mit der Hauptwelle (34) durch einen Schwingarm (38), angelenkt einerseits an der genannten Stütze (37) und andererseits an einem Zwischenstück (39), fest verbunden mit der vorerwähnten Hauptwelle (34),
**dadurch gekennzeichnet,** daß der Anlenkpunkt des Verbindungsschwingarms (38) an der entsprechenden Stütze (37) zusammenfällt mit der Achse (37a), auf der eine der beiden Stützrollen (36) der betreffenden Stütze (37) angebracht ist.
